# FASCICULE DE BREVET EUROPEEN

(11) **EP 1 772 659 B1**
(45) Date de publication et mention de la délivrance du brevet: **16.06.2010**
(21) Numéro de dépôt: 06356121.1
(22) Date de dépôt: 03.10.2006
(51) Int. Cl.: F16L 13/14, G08C 17/02, B25B 27/02

(54) **Raccord à sertir pour tube**
Rohrkupplung
Pipe connection

(30) Priorité: 10.10.2005 FR 0510323
(43) Date de publication de la demande: 11.04.2007
(73) Titulaire: COMAP, 69008 Lyon (FR)
(72) Inventeur: Scalfi, Luca, 25089 Villanuova S/C Brescia (IT); Le Clinche, Pascal, 69008 Lyon (FR)
(74) Mandataire: Maureau, Philippe

(56) Documents cités:
- EP-A- 1 081 421
- EP-A- 1 571 383
- WO-A-00/79239
- WO-A-2004/010163
- FR-A- 2 862 367
- US-A1- 2003 230 131

## Description

La présente invention concerne un raccord pour tubes comprenant un indicateur de sertissage.

Lors de l'installation d'un réseau de tubes, l'installateur réalise un assemblage comprenant notamment des tubes et des raccords avec plusieurs phases, successivement d'emboîtement d'un tube et d'un raccord, puis de sertissage au cours de laquelle le raccord est serti sur l'extrémité du tube pour garantir la tenue mécanique durable de l'installation et son étanchéité.

Afin de garantir l'étanchéité durable de l'installation, il est nécessaire de sertir tous les raccords. Diverses solutions ont été envisagées pour permettre à l'utilisateur de vérifier que tous les raccords ont été sertis.

La création d'une fuite provoquée au niveau du raccord tant que celui-ci n'est pas serti a notamment été envisagée. Cette approche permet à l'opérateur de détecter les raccords non sertis en mettant l'installation sous pression puis en repérant les fuites, soit visuellement, soit en constatant une pression plus faible que la pression normale dans l'installation, ce qui permet une vérification globale du sertissage des raccords de l'installation. Ces fuites peuvent être provoquées par des joints de forme spécifique, n'assurant pas d'étanchéité avant sertissage, ce qui implique une fabrication coûteuse et peut impliquer un positionnement particulier du joint dans une gorge prévue à cet effet. Les fuites peuvent également être provoquées par la forme du raccord, permettant ainsi d'utiliser des joints communs toriques de section constante.

En particulier, les documents DE 101 18 955 et WO 01/63160 décrivent deux dispositifs permettant de réaliser de telles fuites provoquées avant sertissage.

Il a également été envisagé d'utiliser des moyens de marquage présents sur chaque raccord sous forme de bagueou insert, comme décrit dans les documents WO/01/21997, DE 100 02 916 ou WO 2004/010163 A. Toutefois, ces bagues se montrent difficiles à détruire lors du sertissage par les outils de sertissage, et produisent des débris qui restent sur le lieu de l'installation, et peuvent encrasser l'outil de sertissage.

Le but de la présente invention est de fournir une solution permettant une détection fiable du sertissage, permettant de réaliser la détection du sertissage des raccords sans procéder à une inspection visuelle individuelle de chaque raccord.

A cet effet, la présente invention concerne un raccord à sertir pour tube, comprenant au moins une emboîture pour un tube, caractérisé en ce qu'il comporte de plus, au niveau d'au moins une emboîture, une étiquette RFID dont le signal émis, par émission directe ou en réponse à un signal émis par un dispositif d'émission et/ou de lecture RFID, est différent avant et après le sertissage de l'emboîture sur un tube.

Ainsi, il est possible de réaliser une détection des raccords non serti avec des moyens de lecture RFID, en pouvant identifier à distance les emboîtures non serties des raccords, et de les localiser. Il est possible de détecter ces raccords non serti sans visibilité, par exemple dans l'obscurité ou lorsque le raccord est masqué à l'opérateur. De plus, il est possible de vérifier rapidement si un ensemble de raccords est serti, sans procéder à une vérification individuelle, la zone de vérification dépendant uniquement de la portée du lecteur.

Selon une première possibilité, au moins une étiquette est située dans une zone d'une emboîture destinée à être sertie, cette étiquette étant destinée à être détruite lors du sertissage, et n'émettant plus de signal après sertissage.

Selon une seconde possibilité, au moins une étiquette est destinée à émettre un premier signal avant sertissage, puis un second signal après sertissage, le changement du premier au second signal étant occasionné par un signal émis par un dispositif extérieur au raccord.

Avantageusement, au moins une étiquette est située en dehors de la zone à sertir de l'emboîture.

La présente invention concerne également un outil de sertissage comme celui décrit dans le document US 2003/230131 A destiné au sertissage d'un raccord tel que décrit ci-dessus, caractérisé en ce qu'il comporte des moyens d'émission et ou de lecture RFID, destinés à la lecture d'au moins une étiquette située au niveau de l'emboîture sur laquelle l'outil est positionné.

Avantageusement, les moyens d'émission et ou de lecture RFID émettent, lorsque l'outil est positionné sur l'emboîture, un signal vers au moins une étiquette RFID située au niveau de l'emboîture, afin de changer le signal émis par l'étiquette.

La présentation porte également sur un procédé de vérification du sertissage d'une installation comprend un ensemble de raccords tel que décrits précédemment, comprenant les étapes consistant à :
a) Utiliser un lecteur RFID pour identifier si un signal de non sertissage est émis par au moins une étiquette,
b) Si au moins un signal est émis, détecter et localiser une étiquette émettant un signal de non sertissage,
c) Sertir l'emboîture du raccord comportant l'étiquette émettant le signal de non sertissage,
d) Recommencer à l'étape a) jusqu'à ce qu'aucun signal de non sertissage ne soit émis.

De toute façon, l'invention sera bien comprise à l'aide de la description qui suit, en référence au dessin schématique annexé, représentant à titre d'exemple non limitatif, plusieurs formes de réalisation d'une bague et d'une étiquette RFID selon l'invention.

La figure 1 est une vue d'un raccord selon un premier mode de réalisation, l'extrémité d'un tube étant introduite dans une emboîture du raccord, et la position d'un outil de sertissage étant visualisée.

La figure 2 est une vue d'un raccord selon un premier mode de réalisation, l'extrémité d'un tube étant introduite dans une emboîture du raccord, et la position d'un outil de sertissage étant visualisée.

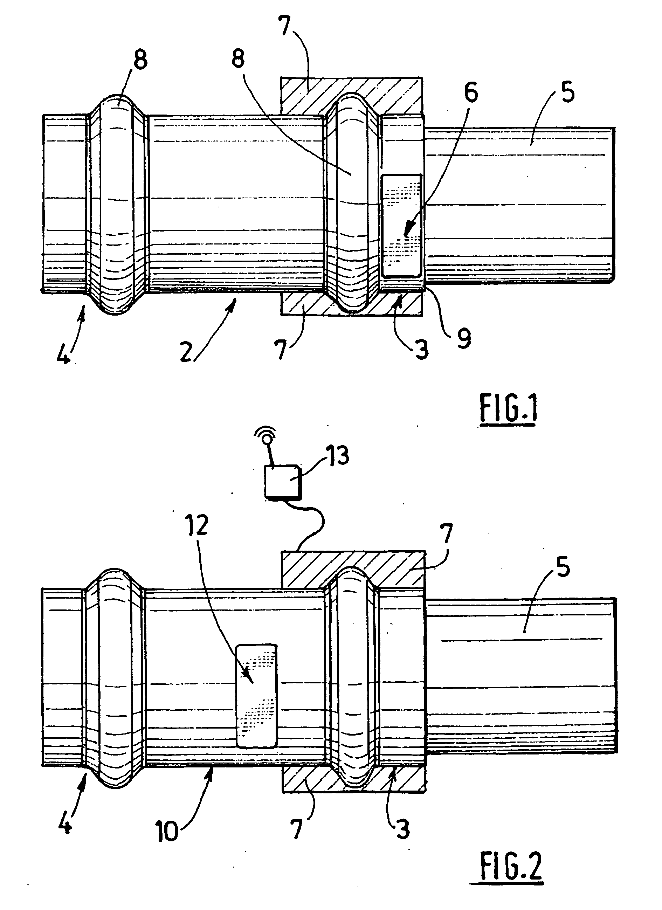

Selon un premier mode de réalisation, représenté sur la figure 1, un raccord 2 à sertir pour tube selon l'invention comprend, à titre d'exemple, deux emboîture 3, 4 pour des tubes 5.

Le raccord 2 comporte, au niveau de chaque emboîture 3, 4, une étiquette RFID 6.

Sur la figure 1, une seule étiquette est représentée, associée à l'emboîture 3.

L'étiquette 6 est située dans une zone d'une emboîture 3 destinée à être sertie, cette zone correspondant à la zone où se positionnent les mâchoires 7 d'un outil de sertissage.

En particulier, l'emboîture comporte un bourrelet 8 situé à distance d'un bord de l'emboîture 9. Il est connu de positionner les mâchoires de l'outil de sertissage grâce à une rainure ménagée dans la mâchoire, de forme complémentaire au bourrelet 8 et destinée à recevoir celui-ci lors que la mâchoire est en position sur l'emboîture, ce bourrelet servant ainsi de repère de positionnement pour l'outil de sertissage.

Ainsi, afin de positionner l'étiquette dans la zone sertie de l'emboîture, il est possible de positionner l'étiquette entre le bourrelet 8 et le bord de l'emboîture 9.

Dans cette position, l'étiquette 6 est destinée à être détruite lors du sertissage.

L'étiquette émet, avant sertissage, par émission directe ou en réponse à un signal émis par un lecteur, un signal donné, indicateur du non sertissage de l'emboîture 3.

Lors du sertissage, un opérateur positionne un outil de sertissage comme indiqué ci-dessus.

Après sertissage, l'étiquette étant détruite, elle n'émet plus de signal par émission directe ou en réponse à un signal émis par un lecteur.

Ainsi, le signal émis, par émission directe ou en réponse à un signal émis par un lecteur, est différent avant et après le sertissage de l'emboîture 3 sur le tube 5.

Le signal de sertissage correspond à une absence de signal.

En variante, l'outil de sertissage peut être équipé d'un lecteur RFID pour détecter et comptabiliser l'étiquette RFID avant sa destruction.

Selon un second mode de réalisation représenté sur la figure 2, un raccord 10 comporte à nouveau deux emboîtures 3 et 4 pour un tube 5, le corps du raccord étant identique au corps du raccord décrit dans le premier mode de réalisation.

Le raccord 2 comporte, au niveau de chaque emboîture 3, 4, une étiquette RFID 12.

Sur la figure 1, une seule étiquette est représentée, associée à l'emboîture 3.

L'étiquette 12 est située dans une zone d'une emboîture 3 n'étant pas destinée à être sertie, cette zone étant en dehors de la zone où se positionnent les mâchoires 7 d'un outil de sertissage.

En particulier, l'étiquette est disposée à distance du bourrelet 8, du côté opposé du bourrelet 8, par rapport au bord 9 de l'emboîture.

L'étiquette 12 est destinée à émettre :
- un premier signal avant sertissage, puis
- un second signal après sertissage, le changement du premier au second signal étant occasionné par un signal émis par un dispositif extérieur au raccord.

Ce dispositif émettant le signal, lors du sertissage, est l'outil de sertissage qui comporte des moyens d'émission et ou de lecture RFID 13, représentés schématiquement sur la figure 2, destinés à la lecture de l'étiquette 12 située au niveau de l'emboîture sur laquelle l'outil est positionné.

Ainsi, les moyens d'émission et de lecture 13 envoient, lorsque l'outil est positionné sur l'emboîture, un signal vers l'étiquette RFID 12 située au niveau de l'emboîture 3, afin de changer le signal émis par l'étiquette.

L'utilisation des raccords décrits ci-dessus, selon le premier ou le second mode de réalisation, permet de mettre en oeuvre un procédé de vérification du sertissage d'une installation comprenant un ensemble de raccords, comprenant les étapes consistant à :
a) Utiliser un lecteur RFID pour identifier si un signal de non sertissage est émis par au moins une étiquette,
b) Si au moins un signal est émis, détecter une étiquette émettant un signal de non sertissage,
c) Sertir l'emboîture du raccord comportant l'étiquette émettant le signal de non sertissage,
d) Recommencer à l'étape a) jusqu'à ce qu'aucun signal de non sertissage ne soit émis.

Comme il va se soi, l'invention ne se limite pas aux formes de réalisation préférentielle décrite ci-dessus, à titre d'exemple non limitatif ; elle en embrasse au contraire toutes les variantes de réalisation dans le cadre des revendications ci-après.

## Revendications

1. Raccord à sertir (2, 10) pour tube, comprenant au moins une emboîture (3, 4) pour un tube (5), **caractérisé en ce qu'**il comporte de plus, au niveau d'au moins une emboîture (3, 4), une étiquette RFID (6, 12) dont le signal émis, par émission directe ou en réponse à un signal émis par un dispositif d'émission et/ou de lecture RFID, est différent avant et après le sertissage de l'emboîture (3, 4) sur un tube (5).

2. Raccord à sertir (2) selon la revendication 1, **caractérisé en qu'**au moins une étiquette (6) est située dans une zone d'une emboîture (3, 4) destinée à être sertie, cette étiquette (6) étant destinée à être détruite lors du sertissage, et n'émettant plus de signal après sertissage.

3. Raccord à sertir (10) selon la revendication 1, **caractérisé en ce qu'**au moins une étiquette (12) est destinée à émettre un premier signal avant sertissage, puis un second signal après sertissage, le changement du premier au second signal étant occasionné par un signal émis par un dispositif extérieur au raccord.

4. Raccord à sertir (10) selon la revendication 3, **caractérisé en ce qu'**au moins une étiquette (12) est située en dehors de la zone à sertir de l'emboîture (3, 4).

5. Outil de sertissage destiné au sertissage d'un raccord selon l'une des revendications 1 à 4, **caractérisé en ce qu'**il comporte des moyens (13) d'émission et ou de lecture RFID, destinés à la lecture d'au moins une étiquette (6, 12) située au niveau de l'emboîture (3, 4) sur laquelle l'outil est positionné.

6. Outil de sertissage selon la revendication 5, **caractérisé en ce que** les moyens (13) d'émission et ou de lecture RFID émettent, lorsque l'outil est positionné sur l'emboîture (3, 4), un signal vers au moins une étiquette RFID (12) située au niveau de l'emboîture, afin de changer le signal émis par l'étiquette.

7. Procédé de vérification du sertissage d'une installation comprend un ensemble de raccords selon l'une des revendications 1 à 4, comprenant les étapes consistant à :
a) Utiliser un lecteur RFID pour identifier si un signal de non sertissage est émis par au moins une étiquette,
b) Si au moins un signal est émis, détecter et localiser une étiquette émettant un signal de non sertissage,
c) Sertir l'emboîture du raccord comportant l'étiquette émettant le signal de non sertissage,
d) Recommencer à l'étape a) jusqu'à ce qu'aucun signal de non sertissage ne soit émis.

## Claims

1. Crimp connector (2, 10) for tube, comprising at least one jointing element (3, 4) for a tube (5), **characterized in that** it also comprises, at at least one jointing element (3, 4), an RFID label (6, 12) from which the transmitted signal, by direct transmission or in response to a signal transmitted by an RFID transmission and/or reading device, is different before and after the crimping of the jointing element (3, 4) onto a tube (5).

2. Crimp connector (2) according to Claim 1, **characterized in that** at least one label (6) is situated in a zone of a jointing element (3, 4) intended to be crimped, this label (6) being designed to be destroyed during the crimping, and no longer transmitting a signal after crimping.

3. Crimp connector (10) according to Claim 1, **characterized in that** at least one label (12) is designed to transmit a first signal before crimping, then a second signal after crimping, the change from the first to the second signal being caused by a signal transmitted by a device external to the connector.

4. Crimp connector (10) according to Claim 3, **characterized in that** at least one label (12) is situated outside the zone to be crimped of the jointing element (3, 4).

5. Crimping tool designed for crimping a connector according to one of Claims 1 to 4, **characterized in that** it comprises RFID transmission and/or reading means (13) designed for reading at least one label (6, 12) situated at the jointing element (3, 4) on which the tool is positioned.

6. Crimping tool according to Claim 5, **characterized in that** the RFID transmission and/or reading means (13) transmit, when the tool is positioned on the jointing element (3, 4), a signal to at least one RFID label (12) situated at the jointing element, in order to change the signal transmitted by the label.

7. Method for verifying the crimping of an installation comprising a set of connectors according to one of Claims 1 to 4, comprising the following steps consisting in:
a) using an RFID reader to identify whether an "uncrimped" signal is transmitted by at least one label,
b) if at least one signal is transmitted, detecting and locating a label transmitting an "uncrimped" signal,
c) crimping the jointing element of the connector comprising the label transmitting the "uncrimped" signal,
d) repeating step a) until no "uncrimped" signal is transmitted.

## Patentansprüche

1. Rohr-Quetschverbinder (2, 10), der mindestens eine Muffe (3, 4) für ein Rohr (5) enthält, **dadurch gekennzeichnet, dass** er außerdem in Höhe mindestens einer Muffe (3, 4) ein RFID-Etikett (6, 12) aufweist, dessen Signal, das durch direktes Senden oder als Antwort auf ein von einer RFID-Sende- und/oder Ablesevorrichtung gesendet wird, vor und nach dem Quetschen der Muffe (3, 4) auf ein Rohr (5) unterschiedlich ist.

2. Quetschverbinder (2) nach Anspruch 1, **dadurch gekennzeichnet, dass** mindestens ein Etikett (6) sich in einem Bereich einer Muffe (3, 4) befindet, der dazu bestimmt ist, gequetscht zu werden, wobei dieses Etikett (6) dazu bestimmt ist, beim Quetschen zerstört zu werden und nach dem Quetschen kein Signal mehr sendet.

3. Quetschverbinder (10) nach Anspruch 1, **dadurch gekennzeichnet, dass** mindestens ein Etikett (12) dazu bestimmt ist, vor dem Quetschen ein erstes Signal und dann nach dem Quetschen ein zweites Signal zu senden, wobei der Übergang vom ersten zum zweiten Signal durch ein Signal verursacht wird, das von einer außerhalb des Verbinders befindlichen Vorrichtung gesendet wird.

4. Quetschverbinder (10) nach Anspruch 3, **dadurch gekennzeichnet, dass** mindestens ein Etikett (12) sich außerhalb des zu quetschen Bereichs der Muffe (3, 4) befindet.

5. Presswerkzeug, das zum Quetschen eines Verbinders nach einem der Ansprüche 1 bis 4 bestimmt ist, **dadurch gekennzeichnet, dass** es Einrichtungen (13) zum RFID-Senden und/oder -Ablesen aufweist, die zum Lesen mindestens eines Etiketts (6, 12) bestimmt sind, das sich in Höhe der Muffe (3, 4) befindet, auf der das Werkzeug positioniert ist.

6. Presswerkzeug nach Anspruch 5, **dadurch gekennzeichnet, dass**, wenn das Werkzeug auf der Muffe (3, 4) positioniert ist, die Einrichtungen (13) zum RFID-Senden und/oder -Ablesen ein Signal an mindestens ein RFID-Etikett (12) senden, das sich in Höhe der Muffe befindet, um das vom Etikett gesendete Signal zu ändern.

7. Verfahren zur Überprüfung der Quetschverbindung einer Anlage, die eine Gruppe von Verbindern nach einem der Ansprüche 1 bis 4 enthält, das die Schritte enthält, die darin bestehen:
a) ein RFID-Lesegerät zu verwenden, um festzustellen, ob ein Signal des Nicht-Quetschens von mindestens einem Etikett gesendet wird,
b) wenn mindestens ein Signal gesendet wird, ein Etikett zu erfassen und zu lokalisieren, das ein Signal des Nicht-Quetschens sendet,
c) die Muffe des Verbinders zu quetschen, die das Etikett aufweist, das das Signal des Nicht-Quetschens sendet,
d) wieder mit dem Schritt a) zu beginnen, bis kein Signal des Nicht-Quetschens mehr gesendet wird.
